# EUROPÄISCHE PATENTANMELDUNG

(11) **EP 1 337 055 A2**
(43) Veröffentlichungstag der Anmeldung: **20.08.2003**
(21) Anmeldenummer: 03001601.8
(22) Anmeldetag: 24.01.2003
(51) Int. Cl.: H04H 1/00

(54) **Verfahren und System für die Informationsbereitstellung und Kommunikation in Fahrzeugen**

(30) Priorität: 19.02.2002 DE 10207858
(71) Anmelder: Deutsche Telekom AG, 53113 Bonn (DE)
(72) Erfinder: Hischke, Sven, Dr., 61352 Bad Homburg (DE); Kadel, Gerhard, Dr., 64293 Darmstadt (DE)

(57) **Zusammenfassung**

Die Erfindung betrifft ein Verfahren und ein System für die Informationsbereitstellung und die Kommunikation in Fahrzeugen.

Ihr liegt die Aufgabe zugrunde, ein Verfahren anzugeben und ein System zu schaffen, durch welche elektronische Geräte, wie Laptops oder PDAs, mit sich führende Fahrzeuginsassen mit einer hohen Datenrate und kostengünstig auf ein umfangreiches Informationsangebot zugreifen, externe Dienste nutzen oder in einen Datenaustausch mit externen Kommunikationspartnern treten können.

Zur Lösung der Aufgabe wird den Fahrzeuginsassen der Zugriff auf lokal gehaltene Informationen und/oder die Nutzung externer Anwendungen und Dienste vermittels eines im Fahrzeug angeordneten Informations- und Kommunikationssystems ermöglicht. Das System umfasst einen Server mindestens eine mit ihm verbundene über einen Zugang zu mindestens einem Funknetz verfügende Sende- und Empfangseinheit sowie mehrere mit dem Server verbundene, im Fahrzeug verteilt angeordnete Access Points, wobei die Nutzer ausschließlich über das System auf Anwendungen bzw. Informationen zugreifen oder mit externen Partnern bzw. Diensten kommunizieren. Der Datenaustausch zwischen den Geräten der Nutzer und dem System erfolgt breitbandig über die Access Points.

## Beschreibung

Die Erfindung betrifft ein Verfahren für die Informationsbereitstellung und die Kommunikation in Fahrzeugen, vorzugsweise in größeren Fahrzeugen des öffentlichen Personenverkehrs. Gegenstand der Erfindung ist weiterhin ein die Durchführung des Verfahrens ermöglichendes System.

Im Zuge der fortschreitenden Entwicklung zur Informationsgesellschaft führen die Insassen von privaten oder öffentlichen Fahrzeugen (z. B. Bahnen oder Busse) in ständig steigender Zahl elektronische Daten- und Kommunikationsgeräte, wie Laptops, PDA's oder Mobilfunkgeräte mit sich. Mittels dieser Geräte kommunizieren sie mit externen Kommunikationspartnern oder nutzen unterschiedlichste Dienste. Zunehmend wird dabei auch die Möglichkeit des Zugriffs auf das Internet über Mobilfunknetze genutzt. Bedingt durch die gegenwärtig hierfür zur Verfügung stehende Technik, besteht dabei für den Nutzer eine Reihe von Einschränkungen und Nachteilen. So ist zunächst festzustellen, dass die Datenübertragungsraten im allgemeinen noch vergleichsweise gering sind. Ein Download großer Dateien oder die Nutzung von Streaming-Applikationen, beispielsweise Audio oder Video, sind hierdurch nur eingeschränkt möglich. Zudem entstehen für den Nutzer teilweise beträchtliche Kosten.
Auf der anderen Seite können die technischen Möglichkeiten, welche die eingangs genannten Geräte bieten, bei ihrer Verwendung im Fahrzeug in vielen Fällen nicht vollständig genutzt werden. Viele der Geräte verfügen bereits über Funkschnittstellen für lokale Funknetze (WLAN oder Bluetooth), über die sie mit anderen Geräten kommunizieren können. Innerhalb von Fahrzeugen wie Bussen oder Bahnen sind gegenwärtig vergleichbare Schnittstellen aber nicht vorhanden. Betreffend die Kommunikation mit externen Kommunikationspartnern ist zudem festzustellen, dass der Funkempfang oder, im Falle des Sendens, die nach außen gelangende Sendeleistung in Folge der abschirmenden Wirkung der als Faradayscher Käfig wirkenden Fahrzeuge oder auch metallisierter Scheiben durch zusätzliche Dämpfung stark beeinträchtigt bzw. vermindert wird. Durch all diese Nachteile ist eine umfängliche Nutzung von über das Internet bereit gestellten Content oder der Austausch größerer Datenmengen im Grunde nicht möglich, zumindest aber ökonomisch nicht sinnvoll.

Aufgabe der Erfindung ist es ein Verfahren anzugeben, durch welches Fahrzeuginsassen, die entsprechende elektronische Geräte bei sich führen, mit einer hohen Datenrate und kostengünstig auf ein umfangreiches Informationsangebot zugreifen, externe Dienste nutzen und in einen Datenaustausch mit externen Kommunikationspartnern treten können. Weiterhin besteht die Aufgabe in der Schaffung eines zur Durchführung des Verfahrens verwendbaren Systems.

Die Aufgabe wird durch ein Verfahren mit den Merkmalen des Hauptanspruchs gelöst. Ein die Aufgabe lösendes System ist durch den ersten vorrichtungsbezogenen Anspruch charakterisiert. Vorteilhafte Aus- bzw. Weiterbildungen der Erfindung sind durch die jeweiligen Unteransprüche gegeben.
Nach dem erfindungsgemäßen Verfahren wird den Insassen eines Fahrzeugs mittels eines im Fahrzeug angeordneten Informations- und Kommunikationssystems der Zugriff auf lokale, von dem System selbst bereit gestellte Informationen und/oder die Nutzung externer Anwendungen und Dienste ermöglicht. Dabei kommunizieren die Fahrzeuginsassen mittels von ihnen mitgeführter, also im Fahrzeug befindlicher, elektronischer Daten- und Kommunikationsgeräte, wie Laptops, PDA's oder Mobilfunkgeräte, mit dem als zentrale Plattform für lokale Anwendungen und Informationsquellen, sowie als Vermittlungseinrichtung zu den externen Anwendungen und Diensten fungierenden System. In erfindungswesentlicher Weise erfolgt diese Kommunikation drahtlos über verteilt im Fahrzeug angeordnete Systemzugangspunkte, so genannte Access Points. Anders als nach dem Stand der Technik bekannt, greift also nicht jeder Fahrzeugsinsasse direkt auf einen externen Dienst oder dergleichen zu, sondern die Nutzung erfolgt über das vorzugsweise in das Fahrzeug integrierte System. Der Nutzer profitiert hierbei von der Leistungsfähigkeit dieses Systems, welches ihm hohe Datenraten zur Verfügung stellt, die bei einem direkten Zugriff mittels des von ihm mitgeführten elektronischen Gerätes nicht erzielbar sind. Zudem ist es auch in vielen Fällen gar nicht notwendig, dass der Nutzer überhaupt auf externe Dienste zugreift. Vielmehr wird für ihn eine Vielzahl von Informationen, wie beispielsweise Fahrplandaten oder Nachrichten, aber auch Entertainmentangebote, wie Filme oder Spiele, auf lokaler Ebenen vorgehalten. Dabei macht es sich das Verfahren zunutze, dass die Bereitstellung eines hierfür erforderlichen großen Massenspeichers bei einem im Fahrzeug angeordneten System mit technisch wesentlich geringerem Aufwand möglich ist, als bei einem tragbaren Gerät. Der Datenaustausch zwischen den Geräten der Nutzer und den verteilt im Fahrzeug angeordneten Access Points erfolgt entsprechend einer besonders vorteilhaften Ausbildung des erfindungsgemäßen Verfahrens unter Nutzung von Breitband-Funktechnologien, wie Wireless Local Aera Networks (WLANs), Bluetooth oder HYPERLAN/2. Hierdurch ist es möglich, beispielsweise Streaming-Anwendungen in hoher Qualität auf ein Gerät des Nutzers zu übertragen.
Entsprechend einer besonders vorteilhaften Weiterbildung des Verfahrens erfolgt an speziellen hierfür ausgebildeten Haltepunkten des Fahrzeugs ein regelmäßiges Update der lokal auf dem Informations- und Kommunikationssystem gehaltenen Informationen und Anwendungen. In Weiterführung dieses Gedanken ist entsprechend einer weiteren Verfahrensvariante außerdem die Möglichkeit eines Updates von Komponenten der das Informations- und Kommunikationssystem steuernden Software vorgesehen. Zweckmäßiger Weise erfolgt dieses Update ebenfalls an den zuvor genannten speziell ausgebildeten Haltepunkten.

Ein zur Durchführung des Verfahrens ausgebildetes System umfasst einen im Fahrzeug angeordneten Server, mindestens eine, vorzugsweise mehrere, mit ihm verbundene, jeweils über einen Zugang zu mindestens einem externen Funknetz verfügende Sende- und Empfangseinheiten sowie mehrere ebenfalls mit dem Server verbundene, im Fahrzeug verteilt angeordnete Systemzugangspunkte (Access Points). Die Access Points verfügen jeweils über eine Schnittstelle für einen drahtlosen, vorzugsweise funkbasierten Datenaustausch mit den von den Fahrzeuginsassen mitgeführten elektronischen Daten- und Kommunikationsgeräten. Die Bereitstellung der mittels dieser Geräte abgerufenen Informationen und die über sie erfolgende Nutzung externer Dienste oder die Kommunikation mit vorzugsweise externen Kommunikationspartnern wird dabei durch die auf dem Server ablaufende Software gesteuert.
Das System ist vorteilhaft dadurch weitergebildet, dass es koordiniert durch die Systemsoftware und unter Nutzung der Sende- und Empfangseinheiten, jedem Nutzer einen Onlinezugang zum Internet zur Verfügung stellt. Dabei erfolgt der Datenaustausch gemäß dieser Ausgestaltung der Erfindung entsprechend den Anforderungen eines von einem Fahrzeuginsassen genutzten Dienstes und der Verfügbarkeit der Funknetze, in welche die Sende- und Empfangseinheiten eingebucht sind, sehr flexibel. Das heißt, dass der Datenaustausch gegebenenfalls auch während der Nutzung des Dienstes wechselnd über Funknetze, wie GSM, GPRS, UMTS, dedizierte Netze, wie GSM-R, oder Satellitennetze erfolgt. Auch eine Einbeziehung digitaler Rundfunknetze (DAB, DVB, DMB) oder gegebenenfalls dedizierter Netze auf der Basis von DAB oder DVB-Technologien für die Versorgung eines Verkehrsnetzes ist denkbar. Es wird also das jeweils günstigste Funknetz für den Zugriff auf die Informationen genutzt. Außerdem laufen auch einzelne Applikationen gegebenenfalls unter Nutzung unterschiedlicher Verbindungswege. So wird beispielsweise eine kurze E-Mail unter Nutzung einer GSM-Verbindung übertragen, während das Web-Browsing vielleicht über ein Rundfunkmedium, eventuell sogar über eine Satellitenverbindung, erfolgt. Soweit vorstehend vom Zugriff auf externe Dienste bzw. deren Nutzung die Rede ist, umfasst dies selbstverständlich auch das durch das System in intelligenter Weise koordinierte Management großer abgehender Datenmengen, beispielsweise beim Versenden von E-Mails. Insbesondere im Hinblick auf die unterschiedliche Verfügbarkeit der Netze, beispielsweise durch die abschirmende Wirkung von Bauwerken ist diese, ein hohes Maß an Flexibilität ermöglichende Ausbildung des Systems, besonders günstig.
Eine zusätzliche Verbesserung wird dadurch erzielt, dass die Antennen der Sende- und Empfangseinheiten extern angeordnet sind. In vorteilhafter Weiterbildung sind, die externen Antennen dabei als Antennenarray mit geeigneter Signalverarbeitung (so genannte intelligente Antenne) ausgebildet.
Trotz all dieser Maßnahmen ist selbstverständlich eine aufgrund verschiedenster Ursachen immer mögliche Unterbrechung des Funkkontakts nicht vollständig zu verhindern, beispielsweise wenn das Fahrzeug durch einen längeren Tunnel fährt. Um den Nutzer des Systems die externen Dienste unbeeinträchtigt durch solche Unterbrechungen zur Verfügung zu stellen, werden die eingehenden Daten gemäß einer weiteren vorteilhaften Ausgestaltung des Systems in dem Server gepuffert und an den Nutzer mit etwas verringerter Datenrate weitergegeben. Eine solche Pufferung erfolgt natürlich gegebenenfalls auch für abgehende Daten. Hierdurch lassen sich eventuelle Funkunterbrechungen vor dem Nutzer quasi verbergen. Eine andere vorteilhafte Weiterbildung des erfindungsgemäßen Systems betrifft die Möglichkeit eines Updates der auf dem System gehaltenen Daten bzw. der das System steuernden Softwarekomponenten. Hierfür verfügt das System gemäß einer Weiterbildung über mindestens eine externe Schnittstelle, über welche an speziellen Haltepunkten des Fahrzeugs das Einspielen des Updates erfolgt.

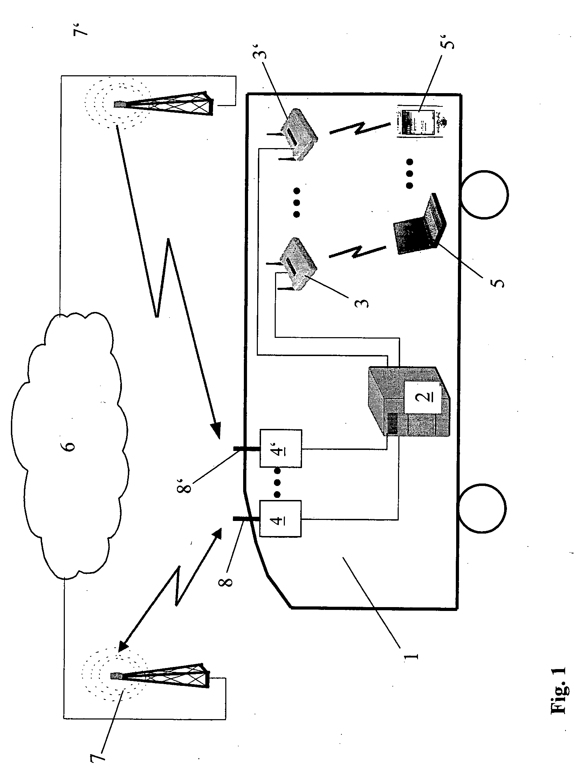

Die Erfindung soll nachfolgend anhand eines Ausführungsbeispiels näher erläutert werden. Die Figur 1 zeigt das erfindungsgemäße System in einer schematischen Darstellung.
Wie ersichtlich, sind alle wesentlichen Komponenten des Systems 2, 3, 3', 4, 4' innerhalb des Fahrzeugs 1 angeordnet. Das in der Zeichnung beispielhaft dargestellte System 2, 3, 3', 4, 4' umfasst einen Server 2, mehrere mit diesem verbundene Sende- und Empfangseinheiten 4, 4' für den Kontakt mit externen Funknetzen 7, 7' sowie ebenfalls mit dem Server verbundene und im Fahrzeug 1 verteilt angeordnete Access Points 3, 3'. Die Anzahl und die Art der Verteilung der Access Points 3, 3' richtet sich selbstverständlich nach der Art des Fahrzeugs 1 (Bus, Bahn oder anderes). Mit enstsprechend ausgerüsteten Geräten 5, 5', also Laptops, PDA's oder Mobilfunkgeräten, mit beispielsweise einer Bluetooth-Schnittstelle können die Fahrzeuginsassen diese Infrastruktur nutzen. Wird von einem Nutzer mittels eines von ihm mitgeführten Gerätes 5, 5' über den Datenaustausch mit einem Access Point 3, 3' eine Information abgefragt, so wird durch den Server 2 des Systems 2, 3, 3', 4, 4' zunächst geprüft, ob diese Information im Rahmen lokal auf dem entsprechend groß dimensionierten (in der Fig. 1 nicht im Detail dargestellten) Massenspeicher des Servers 2 gehaltener Anwendungen und Inhalte verfügbar ist. Nur wenn dies nicht der Fall ist, wird von dem System 2, 3, 3', 4, 4' eine Verbindung zu einem externen Dienst 6 aufgebaut. Handelt es sich bei dem Fahrzeug 1 beispielsweise um ein öffentliches Verkehrsmittel werden insbesondere Informationen über Fahrpläne, Reiserouten oder zu den angefahrenen Zielen vorzugsweise lokal auf dem Server 2 gehalten. Dem Nutzer ist es dabei gleichgültig von wo er die Informationen erhält. Wichtig ist für ihn nur, dass er einen schnellen und komfortablen Zugriff auf die Informationen hat. Will er aber Web-Inhalte nutzen, die nicht auf dem Server liegen, oder per E-Mail kommunizieren, ist dies genauso uneingeschränkt möglich. Es ist im Gegenteil sogar so, dass sich bei der Nutzung dieser Dienste 6 der Komfort für ihn erhöht. Zum einen treten Abschirmungs- bzw. Dämpfungsprobleme, wie sie sonst bei der Nutzung von Mobilfunkgeräten in Bussen oder Bahnen bekannt sind, bei Einsatz des erfindungsgemäßen Systems 2, 3, 3', 4, 4' nicht mehr auf, zum anderen wirkt sich aber auch die gegenüber den mobilen Geräten 5, 5' deutlich höhere Leistungsfähigkeit des Systems 2, 3, 3', 4, 4' vorteilhaft für seine Nutzer aus. Insbesondere betrifft dies den Download oder den Upload großer Datenmengen. Über die, wie im Beispiel, vorteilhafterweise externe Antennen 8, 8' umfassenden Sende- und Empfangseinheiten 4, 4' werden zu den externen Kommunikationspartnern Funkverbindungen mit sehr hohen Datenübertragungsraten aufgebaut. Die empfangenen oder gesendeten Daten werden auf dem Server gepuffert und an den jeweiligen Nutzer über die verteilt im Fahrzeug 1 angeordneten Access Points 3, 3' oder, im Falle des Sendens, über das jeweils genutzte Funknetz an den externen Empfänger weitergeleitet. Für den Nutzer entfällt somit der teure und mittels seines Gerätes 5, 5' nur eine vergleichsweise geringe Datenübertragungsrate ermöglichende Verbindungsaufbau zu dem externen Dienst 6. Der Server 2 nutzt zur Verbindung mit den Diensten 6, je nach deren Anforderungen und der Verfügbarkeit der Funknetze 7, 7', in welchen die Sende- und Empfangseinrichtungen 4, 4' des Systems arbeiten können, unterschiedliche Funknetze 7, 7'. Die auf dem Server 2 laufende Software zur Steuerung des Systems 2, 3, 3', 4, 4' lässt es bei sich verschlechternden Empfangsbedingungen sogar zu, während der Nutzung eines Dienstes 6 das Funknetz 7, 7' zu wechseln, ohne das der Nutzer hierdurch beeinträchtigt wird. Die verschiedenen Funkkommunikationsnetze 7, 7' werden somit folglich durch die Steuerungssoftware des Informations- und Kommunikationssystems im Grunde miteinander vernetzt. Selbstverständlich ist es dadurch auch ermöglicht, die Kommunikation abhängig von den Anforderungen der Dienste und der Verfügbarkeit der Netze, von vornherein, also default-mäßig, auf die verschiedenen Netze aufzuteilen. So können beispielsweise Anwendungen mit hohem Downstream-Anteil vorteilhaft über Rundfunknetze (z. B. DAB) realisiert werden.
Vorzugsweise werden die Anwendungen und der Datenbestand auf dem Server 2, gegebenenfalls auch die Softwarekomponenten zur Steuerung des Systems, zyklisch oder bei Bedarf aktualisiert. Dies geschieht an speziell hierfür vorgesehenen (in der Fig. 1 nicht dargestellten) Haltepunkten des Fahrzeugs 1 mittels "Funk-Brücken" auf der Basis von WLAN-Technologien. An diesen Punkten erfolgt dann beispielsweise eine Aktualisierung von News-Inhalten, die Übertragung neuer Fahrplan- und Liniendaten oder das Einspielen neuer Filme auf den Server 2.
Zusammenfassend ist festzustellen, dass sich für den Nutzer bzw. die Fahrzeuginsassen durch die Erfindung folgende Vorteile ergeben. Der Zugriff auf die lokal auf dem Server 2 verfügbaren Dienste und Anwendungen, wie Entertainmentangebote, erfolgt mit sehr hohen Datenraten. Für den Online-Zugriff auf das Internet mittels mobilen Endgeräten, welche eine Schnittstelle zur Datenübertragung unter Nutzung von Breitbandtechnologien (z. B. Bluetooth, WLAN, HIPERLAN/2) besitzen, erhöht sich die Verfügbarkeit und auch hier erfolgt ein Download bedingt durch die Leistungsfähigkeit der Komponenten des Systems 2, 3, 3', 4, 4' mit einer deutlich höheren Datenrate als bei einem Direktzugriff, beispielsweise von einem Mobiltelefon. In der Konsequenz ergeben sich hieraus für den Nutzer neben der Verbesserung des Komforts insbesondere deutlich verringerte Kosten.

Liste der verwendeten Bezugszeichen
- 1: Fahrzeug
- 2: Server
- 3, 3': Systemzugangspunkt
- 4, 4': Sende- und Empfangseinheit
- 5, 5': mobiles Gerät
- 6: Dienst
- 7, 7': Funk(-kommunikations-)netz
- 8, 8': Antenne

## Patentansprüche

1. Verfahren zur Informationsbereitstellung und Kommunikation in Fahrzeugen (1), nach welchem den Insassen eines Fahrzeugs (1) vermittels eines im Fahrzeug (1) angeordneten, vorzugsweise in das Fahrzeug (1) integrierten, Informations- und Kommunikationssystems (2, 3, 3', 4, 4') der Zugriff auf lokale, von dem System (2, 3, 3', 4, 4') selbst bereitgestellte Informationen und/oder die Nutzung externer Anwendungen und Dienste (6) ermöglicht wird, wobei die Fahrzeuginsassen mittels von ihnen mitgeführter elektronischer Daten- und Kommunikationsgeräte (5, 5'), wie Laptops, PDAs oder Mobilfunkgeräte, mit dem als zentrale Plattform für lokale Anwendungen und Informationsquellen sowie als Vermittlungseinrichtung zu den externen Anwendungen und Diensten (6) fungierenden System(2, 3, 3', 4, 4') drahtlos über verteilt im Fahrzeug (1) angeordnete Systemzugangspunkte (Access Points) (3, 3') breitbandig kommunizieren.

2. Verfahren nach Anspruch 1, **dadurch gekennzeichnet, dass** die Kommunikation zwischen den elektronischen Geräten (5, 5') der Fahrzeuginsassen sowie dem Informations- und Kommunikationssystem(2, 3, 3', 4, 4') über die Access Points (3, 3') unter Nutzung von Breitband-Funktechnologien wie Wireless Local Area Networks (WLANs), Bluetooth oder HIPERLAN/2 erfolgt.

3. Verfahren nach Anspruch 1 oder 2, **dadurch gekennzeichnet, dass** an hierfür ausgebildeten Haltepunkten des Fahrzeugs (1) ein Update der lokal auf dem Informations- und Kommunikationssystem (2, 3, 3', 4, 4') gehaltenen Informationen und Anwendungen erfolgt.

4. Verfahren nach Anspruch 1 oder 2, **dadurch gekennzeichnet, dass** an hierfür ausgebildeten Haltepunkten des Fahrzeugs (1) ein Update der das Informations- und Kommunikationssystem (2, 3, 3', 4, 4') steuernden Softwarekomponenten erfolgt.

5. System (2, 3, 3', 4, 4') zur Informationsbereitstellung und Kommunikation in Fahrzeugen (1), welches den Fahrzeuginsassen den Zugriff auf lokale, von dem System (2, 3, 3', 4, 4') selbst bereitgestellte Informationen und/oder die Nutzung externer Anwendungen und Dienste ermöglicht und einen im Fahrzeug (1) angeordneten Server (2), mindestens eine, vorzugsweise mehrere, mit ihm verbundene, jeweils über einen Zugang zu mindestens einem Funknetz (7, 7') verfügende Sende- und Empfangseinheiten (4, 4') sowie mehrere ebenfalls mit dem Server (2) verbundene, im Fahrzeug (1) verteilt angeordnete Systemzugangspunkte (Access Points) (3, 3') umfasst, wobei die Access Points (3, 3') jeweils über eine Schnittstelle für einen drahtlosen, vorzugsweise funkbasierten Datenaustausch mit von den Fahrzeuginsassen mitgeführten elektronischen Daten- und Kommunikationsgeräten (5, 5'), wie Laptops, PDAs oder Mobilfunkgeräten, verfügen und wobei die Bereitstellung der vermittels dieser Geräte (5, 5') abgerufenen Informationen und die über sie erfolgende Nutzung externer Dienste (6) oder Kommunikation mit vorzugsweise externen Kommunikationspartnern durch eine auf dem Server (2) ablaufende Software gesteuert wird.

6. System (2, 3, 3', 4, 4') nach Anspruch 5, **dadurch gekennzeichnet, dass** das System, koordiniert durch die steuernde Software und unter Nutzung der Sende- und Empfangseinheiten (4, 4'), jedem Nutzer einen Online-Zugang zum Internet zur Verfügung stellt, bei dem der Datenaustausch entsprechend den Anforderungen eines von einem Fahrzeuginsassen genutzten Dienstes (6) und der Verfügbarkeit der Funknetze (7, 7'), in welche die Sendeund Empfangseinheiten (4, 4') eingebucht sind, flexibel und gegebenenfalls auch während der Nutzung des Dienstes (6) wechselnd über Funknetze (7, 7'), wie GSM, GPRS, UMTS, dedizierte Netze, wie GSM-R oder Satellitennetze erfolgt.

7. System (2, 3, 3', 4, 4') nach Anspruch 5 oder 6, **dadurch gekennzeichnet, dass** die Sende- und Empfangseinheiten (4, 4') extern am Fahrzeug (1) angeordnete Antennen (8, 8') umfassen.

8. System (2, 3, 3', 4, 4') nach Anspruch 7, **dadurch gekennzeichnet, dass** die externen Antennen (8, 8') ein Antennenarray mit eingeschlossener Signalverarbeitung bilden.

9. System (2, 3, 3', 4, 4') nach Anspruch 5 oder 6, **dadurch gekennzeichnet, dass** dieses über mindestens eine externe Schnittstelle für ein Update lokal auf dem System (2, 3, 3', 4, 4') bzw. dessen Server (2) gehaltener Informationen und Anwendungen und/oder der auf diesem zur Steuerung des Systems ablaufenden Software verfügt.
